# EUROPEAN PATENT SPECIFICATION

(11) **EP 1 736 439 B1**
(45) Date of publication and mention of the grant of the patent: **24.03.2010**
(21) Application number: 06012846.9
(22) Date of filing: 22.06.2006
(51) Int. Cl.: C01B 5/02, B01D 59/50, C02F 1/26, C02F 1/461

(54) **Method and apparatus for concentrating tritiated water**
Verfahren und Vorrichtung zum Konzentrieren von tritiumhaltigen Wasser
Méthode et appareil pour la concentration d'eau tritiée

(30) Priority: 24.06.2005 GB 0512883
(43) Date of publication of application: 27.12.2006
(73) Proprietor: United Kingdom Atomic Energy Authority, Harwell Oxfordshire OX11 0RA (GB)
(72) Inventor: Bell, Alistair Croft, Stadhampton, Oxfordshire OX44 7UR (GB); Perevezentsev, Alexander Nikolaevich, Oxfordshire OX10 9PU (GB)
(74) Representative: Mansfield, Peter Turquand

(56) References cited:
- GB-A- 2 021 536
- ALEKSEEV I A ET AL: "Operating experience of the experimental industrial plant for reprocessing of tritiated water wastes" FUSION ENGINEERING AND DESIGN, ELSEVIER SCIENCE PUBLISHERS, AMSTERDAM, NL, vol. 58-59, 1 November 2001 (2001-11-01), pages 439-443, XP004312922 ISSN: 0920-3796

## Description

The present invention relates to a method and apparatus for the concentration of tritium in light and/or heavy water.

Tritium contaminated water is produced by nuclear fuel reprocessing plants, the pharmaceutical industry and heavy water nuclear power reactors among other sources. The water may be light or heavy water. Tritium is usually present at a low level in the water and this typically renders the recovery of the tritium uneconomic. However, tritium may not be disposed of directly into the environment and therefore disposal of such water wastes is typically expensive. As the cost of disposal of radioactive waste is typically dependent on the volume of the waste (for any particular category of waste), it is beneficial to concentrate radioactive waste as far as possible.

Systems using a combination of electrolysis and catalytic exchange (CECE) have proven very effective for removing tritium from tritiated water.

A conventional system for removing tritium from water is disclosed in US 4 190 515. The apparatus comprises a liquid phase catalytic exchange column and an electrolysis cell. Tritium contaminated water is fed into the column which is filled with a hydrophobic catalyst and inert packing material to promote isotopic exchange between liquid water and gaseous hydrogen. Contaminated water entering the column passes down through the column, through a dehumidifier and into the electrolysis cell. The cell electrolyses water to form gaseous hydrogen and oxygen. The hydrogen passes through the dehumidifier and then back into the bottom of the liquid phase catalytic exchange column. As the hydrogen rises up the column it undergoes isotopic exchange with the contaminated water passing down through the column and gives tritium to the liquid water. The hydrogen gas then passes to a stripper column which also contains a catalyst. The hydrogen rises up the column while normal water flows down through it. The tritium transfers to the liquid water and thus the tritium content of the hydrogen gas is further depleted. Water containing an elevated tritium concentration may be withdrawn from the electrolyte.

The conventional system of tritium decontamination and concentration can work well when the tritium contaminated water that is fed to the system always contains the same concentration of tritium. However, in practice a single tritium decontamination apparatus may be used to treat contaminated water from different sources and the concentration of tritium in the water fed into the apparatus may fluctuate over time.

When the apparatus is started up it is necessary to establish a profile of tritium concentration in the two columns (which are above one another). Thus, over the length of the columns the tritium concentration in the water flowing down through the columns varies from a near zero concentration of tritium at the top of the stripper column to a concentration greater than that in the contaminated feed water at the bottom of the lower column. However, it can take a long time to establish this profile in the columns. Once the concentration profile is established the system can work well. However, as soon as the concentration of tritium in the contaminated feed water changes, the concentration profile in the columns is destroyed and must be reestablished. In order to avoid this problem, the concentration of tritium in the feed water is typically monitored at regular intervals. If the concentration of tritium changes then the position where the contaminated water is fed into the column is changed so as to match the new concentration to the position in the column where the concentration of tritium in the water inside the column is the same as that in the feed water. This means that it is necessary to have multiple entry points for feed water into the column. At each entry point suitable water distribution tubes must be located so that the feed water is distributed evenly inside the column. This makes the construction of the columns very complicated. Further, even when multiple entry points are provided for feed water, if the.tritium concentration in the feed water changes such that the concentration of tritium does not match that available at any of the feed water entry points, for example it falls between two, then the tritium concentration will inevitably be disturbed even by feeding the contaminated water in through one of the adjacent entry points.

Thus, in order to operate a conventional tritium decontamination system in a situation in which the tritium level may vary it is necessary to measure the tritium concentration in the tritiated feed water and also to control the flow rate of the tritiated and non-tritiated feed water in order to maintain the tritium concentration profile. There must be multiple feed water entry points to the column and as the concentration of tritium changes the feed water must be moved so as to be fed in through the most suitable entry point. To select the most suitable entry point, the tritium profile along the column has to be known through measurement or computer simulation. Water to be detritiated always contains deuterium, at or above its concentration in natural water. The equilibrium separation factor for tritium isotopic exchange between water and hydrogen depends greatly on the deuterium concentration. Therefore profiles both for tritium and deuterium have to be known and taken into account for selection of most suitable entry point for the feed water. Ideally, both tritium and deuterium concentrations in the feed water should match those in the column at the entry point. For feed water with a deuterium concentration above that in natural water, this is a nearly impossible task, because the positions where the concentrations in the column match those in the feed water are different for tritium and deuterium. So, destroying isotopic profiles in the column by changing the entry point for feed water is practically unavoidable.

A process control system can be used to measure the tritium concentration in the feed water and control which entry point is used. It is typically also necessary to measure the tritium concentration in the tritium enriched product.

The present invention aims to provide a simplified system for reducing the volume of tritiated water waste which does not require complicated monitoring systems and/or multiple feed entry points,

Accordingly the present invention provides a method for reducing the volume of tritiated water waste which comprises introducing tritium contaminated feed water into an electrolysis cell,
electrolysing the tritium contaminated water in the electrolysis cell to form gaseous hydrogen and oxygen and passing the all the hydrogen evolved from the electrolysis cell to a liquid phase catalytic isotope exchange column where the hydrogen rises up the column in counter-current flow with pure water which is introduced to the column through an inlet in the upper portion of the column,
passing the water from the column to the electrolysis cell, and removing tritiated water as a product from the electrolysis cell, wherein tritium contaminated feed water is only introduced directly into the electrolysis cell.

The pure water added to the column refers to a stream of water that is substantially uncontaminated with tritium. It will be appreciated that the invention also provides an apparatus according to claim 7 to perform the said method. The apparatus of the invention might be described as removing tritium from water, as uncontaminated water can readily be produced from the resulting stream of pure hydrogen.

Preferred embodiments of the method and of the apparatus according to the invention are set forth in the sub-claims 2 to 6 and 8.

Typically, the electrolysis cell communicates with the column via a humidifier, and the cell may also be connected to a hydrogen purification unit and an oxygen purification unit. As far as the hydrogen stream is concerned, these can be omitted, so the hydrogen passes directly from the electrolysis cell to the column. Where they are provided, hydrogen evolved in the electrolysis cell passes to the hydrogen purification unit where any water vapour is removed from the gaseous hydrogen and returned to the electrolysis cell so that tritium in the water remains in the cell. The gaseous hydrogen is then passed to the humidifier. Likewise, water vapour is removed from the gaseous oxygen in the oxygen purification unit and returned to the electrolysis cell. The oxygen can then typically be released to the environment or recombined with depleted hydrogen evolved from the column to make water.

The catalytic isotope exchange column is filled with hydrophobic caralyst and an inert hydrophilic packing material. Preferably the catalyst is a group VIII metal with a liquid water repellent organic coating. For example the catalyst could be platinum particles embedded in the pores of activated charcoal and then coated with polytetrafluoroethylene or platinum coated on a hydrophobic polymer such as styrene-divinylbenzene copolymer.

In one embodiment of the present invention the depleted hydrogen discharged from the liquid phase catalytic isotope exchange column is oxidised to water prior to discharge. This takes place in a recombiner connected to the top of the column.

It is also important to remove tritium from heavy (deuterated) water in certain circumstances. However, as deuterated hydrogen and deuterated water are expensive, it is economically advantageous to recycle the deuterated hydrogen. Therefore, when heavy water is decontaminated the apparatus typically further comprises a recombiner connected to the top of the column. Thus the hydrogen evolved at the top of the column is passed to the recombiner where it reacts with oxygen fed to the recombiner to form heavy water. Some of this heavy water provides the pure water feed into the top of the column. To prevent an excess of heavy water entering the system, a portion of the heavy water from the recombiner is fed to an outlet. Where there is no economic need to recycle the deuterated hydrogen, the same method and apparatus can be used for heavy water as for light water.

The water may be fully or partially deuterated.

During operation of the apparatus the water with elevated tritium concentration, as a product, is fully or partially removed from the electrolysis cell and replaced with more tritium contaminated feed water. In one embodiment of the present invention the tritiated product is removed from the electrolysis cell once the concentration of tritium in the water in the electrolysis cell reaches a pre-determined concentration; the apparatus can thus operate on batches of contaminated feed water.

The water fed into the top of the column is typically distributed evenly across the column. The flow rate of the water is also controlled.

Specific constructions of reactors embodying the invention will now be described by way of example and with reference to the drawings filed herewith, in which:
Figure 1 is a schematic drawing of an apparatus according to the present invention;
Figure 2 is a schematic drawing of an apparatus according to the present invention for processing heavy water; and
Figure 3 is a schematic drawing of an apparatus according to the present invention for further concentration of tritium contaminated water.

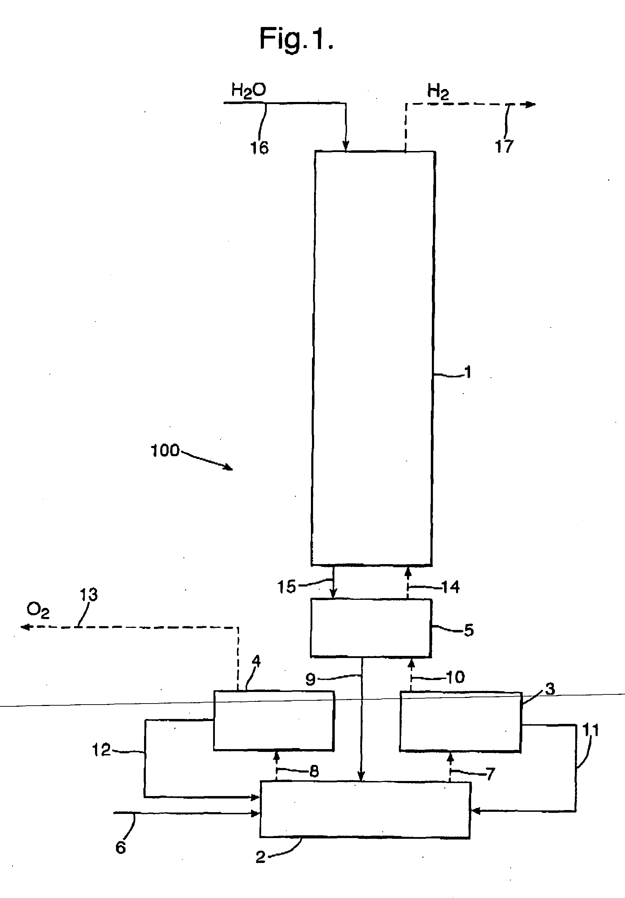

Figure 1 shows an apparatus 100 for treating tritiated water, the apparatus 100 including an electrolysis cell 2. Tritiated water is fed into the electrolysis cell at 6. In the electrolysis cell the tritiated water is converted into gaseous hydrogen and gaseous oxygen. The gaseous hydrogen leaves the cell at 7 and passes to a dehumidifier 3. In the dehumidifier 3 water vapour (containing tritium) is removed from the gaseous hydrogen. The condensed water is returned 11 to the electrolysis cell 2. The gaseous hydrogen then leaves the dehumidifier 3 through outlet 10 and passes into the humidifier 5. In the humidifier the hydrogen gas is heated and saturated with water vapour. The hydrogen passes from the humidifier 5 through the outlet 14 to the liquid phase catalytic isotope exchange column 1. The column contains a hydrophobic catalyst and an inert packing material, Pure water is fed 16 into the top of the column 1 and flows down through the column 1. The gaseous hydrogen and water undergo selective isotopic exchange and the tritium moves selectively into the liquid water. The gaseous hydrogen then leaves the top of the column through an outlet 17. The isotopic exchange in the column causes the hydrogen to be sufficiently depleted in tritium that the gaseous hydrogen can be discharged to the environment. The water entering the column flows down through the column and leaves the bottom of the column through the outlet 15 and passes to the humidifier 5. Water from the humidifier is then fed to the electrolysis cell 2 via line 9. The apparatus 100 also includes monitoring means (not shown) for monitoring the amount of tritium present in the hydrogen produced by the electrolysis cell. The concentration of tritium present in the gaseous hydrogen is proportional to the amount of tritium present in the electrolysis cell. Once the concentration of tritium in the electrolysis cell reaches a certain level the batch of water in the electrolysis cell is removed from and replaced with new tritiated feed water (which contains a lower concentration of tritium).

Oxygen evolved from the electrolysis cell 2 leaves the cell through outlet 8 and passes to a dehumidifier 4. In the dehumidifier 4 water vapour (containing tritium) is removed from the gaseous hydrogen. The condensed water is returned 12 to the electrolysis cell 2. The oxygen then leaves the dehumidifier 4 through outlet 13.

During operation of the apparatus 100 it is necessary co control the flow rate of the tritiated feed water 6 and the natural water 16. However, as the tritiated feed water is added directly to the electrolysis cell 2 it is not necessary to provide multiple inlets for tritiated water.

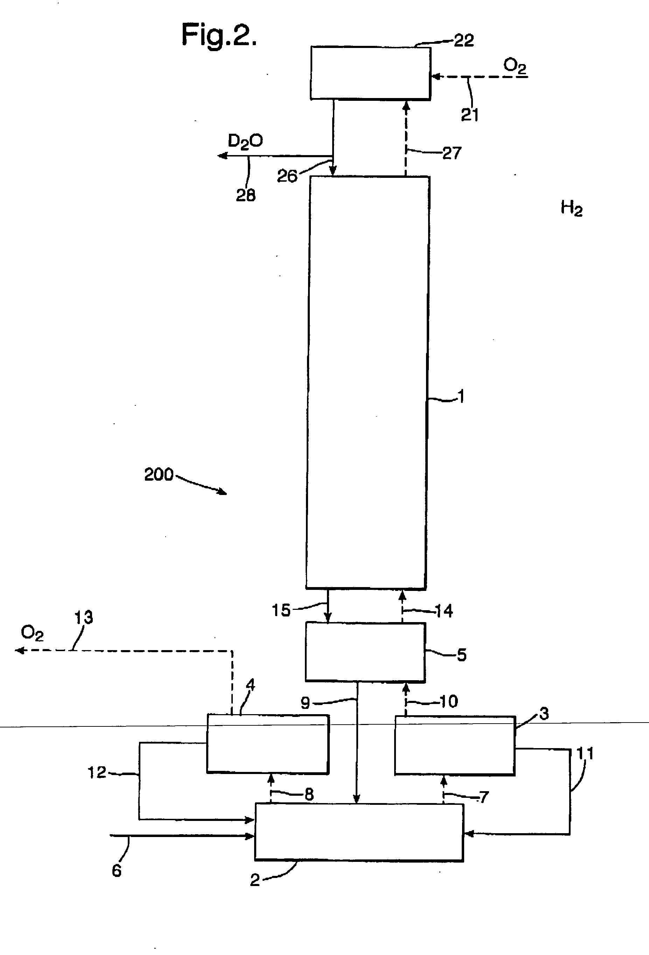

Figure 2 shows a schematic diagram of an apparatus 200 according to the present invention for processing heavy water. The apparatus 200 is substantially the same as the apparatus 100 of Figure 1 and the same numbers denote the same features. However, in order to recover the heavy water the apparatus 200 further comprises a recombiner 22 above the column 1. Thus the deuterated hydrogen leaves the column 1 through outlet 27 and passes into the recombiner 22. In the recombiner it reacts with gaseous oxygen provided through inlet 21 to form deuterated (heavy) water. The heavy water leaves the recombiner 22 through outlet 26 and some of it passes back into the column 1 to provide the pure water feed. The outlet 26 has a further outlet 28 through which the remaining heavy water is removed. In one embodiment of the present invention the oxygen leaving the dehumidifier 4 through the outlet 13 can be used as the feed oxygen 21 for the recombiner 22.

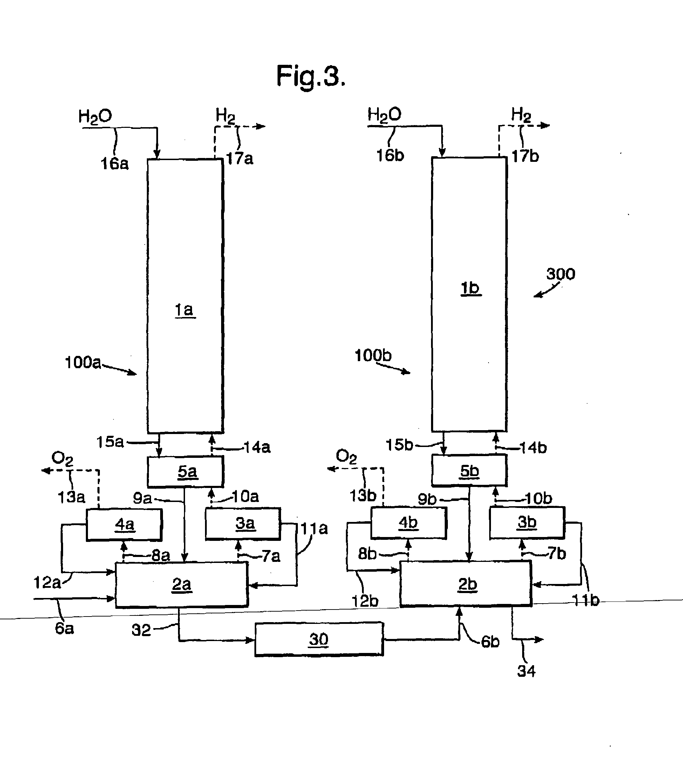

Figure 3 shows a schematic diagram of an apparatus 300 according to the present invention which further enriches the tritium product by using two of the apparatuses 100 in series. This has the advantage of further reducing the final volume of tritium-contaminated water waste. The two sets of apparatus 100 are indicated with the same numbers as used in Figure 1 with the first set of apparatus denoted 'a' and the second 'b'. The tritium contaminated feed water is fed into electrolysis cell 2a though inlet 6a. The tritiated water is processed in the same way as described for Figure 1. When the concentrated tritiated water is removed from the electrolysis cell 2a through outlet 32 it is fed to a tritium product storage unit 30. This tritium contaminated water is then used as the feed water to the apparatus 100b and enters the second electrolysis cell 2b through inlet 6b. The tritium contaminated water is then further concentrated by treatment in the apparatus 100b. The final concentrated product is withdrawn from electrolysis cell 2b through an outlet 34.

### Example 1

The apparatus 100 as shown in Figure 1 was operated for 296 days. 35600 kg of tritiated light water were fed to the electrolysis cell and this contained a total tritium inventory of 105400 GBq. The tritium concentration in the tritiated feed water varied from 2 GBq/kg to 200 GBq/kg (on average about 3 GBq/kg). A pre-determined level of 300 GBq/kg was chosen for the concentration of the tritium contaminated water (the product). This meant the amount of tritium-contaminated water was reduced from 35600 kg to 350 kg. In addition over 35000 kg of tritium-depleted water with a tritium concentration below 100 kBq/kg was obtained from the tritium depleted hydrogen when recombined with oxygen.

A limit of 300 GBq/kg was chosen for the concentration of the tritium containing product as this is below the limit of 330 GBq/kg for international transportation of tritiated water.

## Claims

1. A method for reducing the volume of tritiated water waste which comprises introducing tritium contaminated water into an electrolysis cell,
electrolysing the tritium contaminated water in the electrolysis cell to form gaseous hydrogen and oxygen and passing all the hydrogen evolved from the electrolysis cell to a liquid phase catalytic isotope exchange column where the hydrogen rises up the column in counter-current flow with pure water which is introduced to the column through an inlet in the upper portion of the column, passing the water from the column to the electrolysis cell, and
removing tritiated water as a product from the electrolysis cell,
wherein tritium contaminated feed water is only introduced directly into the electrolysis cell.

2. A method according to claim 1 wherein the tritiated water as a product removed from the electrolysis cell is replaced substantially continuously with tritium contaminated water.

3. A method according to claim 1 or 2 wherein tritiated water as a product is removed from the electrolysis cell once the concentration of tritium in the water in the electrolysis cell reaches a pre-determined concentration.

4. A method according to any one of the preceding claims wherein depleted hydrogen discharged from the liquid phase catalytic isotope exchange column is oxidised to water prior to discharge.

5. A method according to claim 4 wherein at least part of the water produced from the depleted hydrogen returned to the column.

6. A method according to any one of the preceding claims wherein the hydrogen and water are partially or fully deuterated.

7. Apparatus for reducing the volume of tritiated water waste which apparatus comprises an electrolysis cell and a liquid phase catalytic exchange isotope separation column connected such that water flowing down the column enters the cell and that all the hydrogen evolved in the cell enters the bottom of the column, and where the column has a hydrogen outlet at the top, and the electrolysis cell has an outlet for hydrogen and an outlet for oxygen
wherein the column has an inlet for pure water in the upper portion of the column and the electrolysis cell has an inlet for tritium contaminated water,
wherein the only apparatus inlet configured for tritium contaminated feed water is the inlet into the electrolysis cell.

8. Apparatus according to claim 7 further comprising a hydrogen and oxygen recombiner connected to the hydrogen outlet from the column wherein the recombiner has an inlet for oxygen and an outlet for water and the water outlet is connected to the column water inlet.

## Patentansprüche

1. Verfahren zur Verringerung des Volumens von tritiumhaltigem Abwasser, umfassend die Einführung von mit Tritium kontaminiertem Wasser in eine Elektrolysezelle,
Elektrolyse des mit Tritium kontaminierten Wassers in der Elektrolysezelle, um gasförmigen Wasserstoff und Sauerstoff zu bilden und den gesamten Wasserstoff, der sich aus der Elektrolysezelle entwickelt hat, in eine katalytische Isotopenaustauschkolonne in der flüssigen Phase zu leiten, in der der Wasserstoff in der Kolonne im Gegenstrom mit reinem Wasser ansteigt, das durch einen Einlass im oberen Teil der Kolonne in die Kolonne eingeführt wird, wodurch das Wasser aus der Kolonne in die Elektrolysezelle geleitet wird, und
Entfernung tritiumhaltigen Wassers als ein Produkt aus der Elektrolysezelle,
wobei mit Tritium kontaminiertes Speisewasser nur direkt in die Elektrolysezelle eingeführt wird.

2. Verfahren nach Anspruch 1, wobei das tritiumhaltige Wasser als ein Produkt, das aus der Elektrolysezelle entfernt wurde, im Wesentlichen ständig mit tritiumkontaminiertem Wasser ersetzt wird.

3. Verfahren nach Anspruch 1 oder 2, wobei das tritiumhaltige Wasser als ein Produkt aus der Elektrolysezelle entfernt wird, sobald die Konzentration von Tritium im Wasser in der Elektrolysezelle eine vorbestimmte Konzentration erreicht.

4. Verfahren nach einem der vorhergehenden Ansprüche, wobei der abgereicherte Wasserstoff, der aus der katalytischen Isotopenaustauschkolonne in der flüssigen Phase ausströmt, vor dem Ausströmen zu Wasser oxidiert wird.

5. Verfahren nach Anspruch 4, wobei mindestens ein Teil des Wassers, das aus dem abgereicherten Wasserstoff erzeugt wird, in die Kolonne zurückgeführt wird.

6. Verfahren nach einem der vorhergehenden Ansprüche, wobei der Wasserstoff und das Wasser teilweise oder vollständig deuteriert werden.

7. Gerät zur Verringerung des Volumens von tritiumhaltigem Abwasser, wobei das Gerät eine Elektrolysezelle und eine katalytische Isotopenaustausch-Trennkolonne in der flüssigen Phase umfasst, die so verbunden ist, dass das Wasser, das die Kolonne herabfließt, in die Zelle eintritt, und dass der gesamte Wasserstoff, der sich in der Zelle entwickelt hat, in den Boden der Kolonne eintritt, und
wobei die Kolonne oben einen Wasserstoffauslass umfasst und die Elektrolysezelle einen Auslass für Wasserstoff und eine Auslass für Sauerstoff umfasst.
wobei die Kolonne einen Einlass für reines Wasser im oberen Teil der Kolonne aufweist und die Elektrolysezelle einen Einlass für mit Tritium kontaminiertes Wasser aufweist,
wobei der einzige Einlass des Gerätes, der für mit Tritium kontaminiertes Speisewasser konfiguriert ist, der Einlass in die Elektrolysezelle ist.

8. Gerät nach Anspruch 7, weiter umfassend einen Wasserstoff- und Sauerstoffrekombinator, der mit dem Wasserstoffauslass aus der Kolonne verbunden ist, wobei der Rekombinator einen Einlass für Sauerstoff und einen Auslass für Wasser umfasst und der Wasserauslass mit dem Wassereinlass der Kolonne verbunden ist.

## Revendications

1. Procédé destiné à réduire le volume de déchets d'eau tritiée comprenant les étapes consistant à introduire de l'eau contaminée par le tritium dans une cellule d'électrolyse, à électrolyser l'eau contaminée par le tritium dans la cellule d'électrolyse pour former de l'hydrogène et de l'oxygène gazeux et à faire passer tout l'hydrogène extrait de la cellule d'électrolyse dans une colonne d'échange isotopique catalytique à phase liquide, où l'hydrogène monte à contre-courant dans la colonne, de l'eau pure étant introduite dans la colonne via une admission d'eau située dans la partie supérieure de la colonne, permettant à l'eau de circuler de la colonne à la cellule d'électrolyse et à retirer l'eau tritiée sous forme de produit de la cellule d'électrolyse,
dans lequel l'eau d'alimentation contaminée par le tritium est introduite uniquement directement dans la cellule d'électrolyse.

2. Procédé selon la revendication 1, dans lequel l'eau tritiée sous forme de produit extraite de la cellule d'électrolyse est remplacée continuellement et de façon substantielle par l'eau contaminée par le tritium.

3. Procédé selon la revendication 1 ou 2, dans lequel l'eau tritiée sous forme de produit est extraite de la cellule d'électrolyse une fois que la concentration de tritium dans l'eau de la cellule d'électrolyse atteint une concentration prédéterminée.

4. Procédé selon l'une quelconque des revendications précédentes, dans lequel l'hydrogène appauvri déchargé de la colonne d'échange isotopique catalytique à phase liquide est oxydé dans l'eau avant le déchargement.

5. Procédé selon la revendication 4, dans lequel au moins une partie de l'eau produite par l'hydrogène appauvri est renvoyée dans la colonne.

6. Procédé selon l'une quelconque des revendications précédentes, dans lequel l'hydrogène et l'eau sont partiellement ou entièrement deutériés.

7. Appareil destiné à réduire le volume de déchets d'eau tritiée, lequel appareil comprend une cellule d'électrolyse et une colonne de séparation isotopique d'échange catalytique à phase liquide reliée de sorte que l'eau circulant vers le bas de la colonne entre dans la cellule et que tout l'hydrogène extrait dans la cellule entre en bas de la colonne, la colonne ayant une sortie d'hydrogène située en haut et la cellule d'électrolyse ayant une sortie pour l'hydrogène et une sortie pour l'oxygène,
dans lequel la colonne possède une admission pour l'eau pure dans la partie supérieure de la colonne et la cellule d'électrolyse possède une admission pour l'eau contaminée par le tritium,
dans lequel la seule admission d'eau de l'appareil configurée pour l'eau d'alimentation contaminée par le tritium est l'admission d'eau dans la cellule de l'électrolyse.

8. Appareil selon la revendication 7, comprenant en outre un appareil de recombinaison pour l'hydrogène et l'oxygène relié à la sortie d'hydrogène de la colonne, où l'appareil de recombinaison possède une admission pour l'oxygène et une sortie pour l'eau, la sortie pour l'eau étant reliée à l'admission d'eau de la colonne.
